(19) Europäisches Patentamt / European Patent Office / Office européen des brevets

(11) **EP 4 342 849 A1**

(12) **EUROPEAN PATENT APPLICATION**
published in accordance with Art. 153(4) EPC

(43) Date of publication:
**27.03.2024 Bulletin 2024/13**

(21) Application number: **22804534.0**

(22) Date of filing: **28.04.2022**

(51) International Patent Classification (IPC):
**C01G 23/07** (2006.01)

(52) Cooperative Patent Classification (CPC):
**C01G 23/07**

(86) International application number:
**PCT/JP2022/019383**

(87) International publication number:
**WO 2022/244620 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2021 JP 2021083292**

(71) Applicant: **Resonac Corporation Tokyo (JP)**

(72) Inventors:
• **FURUMOTO, Yoshiyasu**
**Toyama-shi, Toyama 931-8577 (JP)**
• **KAYAMA, Susumu**
**Toyama-shi, Toyama 931-8577 (JP)**
• **KOGOI, Hisao**
**Toyama-shi, Toyama 931-8577 (JP)**

(74) Representative: **Strehl Schübel-Hopf & Partner Maximilianstrasse 54 80538 München (DE)**

(54) **TITANIUM OXIDE PARTICLES AND METHOD FOR PRODUCING SAME**

(57) Provided are titanium oxide particles with excellent homogeneity and dispersibility and few coarse particles, as well as a method for their production, and a slurry, dispersion, composition and dielectric starting material that include the titanium oxide particles. In the titanium oxide particles of the invention, the D90 (LD)/D50 (LD) ratio of the titanium oxide particles as measured by laser diffraction/scattering analysis is greater than 1.0 and 2.0 or lower, and the particle concentration of coarse particles having a size exceeding 16 times the D50 (SEM)( 16 × the D50 (SEM)), for primary particles as observed under a field emission scanning electron microscope (based on number of particles), is 20 ppm or lower. For their production, a source gas and oxidizing gas are introduced into a reaction tube and reacted, with a purge medium blowing outlet being provided on the inner wall of the reaction tube, and the blowout angle of the purge medium and the blowout flow velocity (B) of the purge medium from the inner wall of the reaction tube being such that the purge medium is introduced in a swirling manner along the inner wall of the reaction tube.

FIG. 1

(a)

(b)

EP 4 342 849 A1

**Description**

FIELD

The present invention relates to titanium oxide particles and a method for their production, and to a slurry, dispersion, composition and dielectric starting material which include the titanium oxide particles.

BACKGROUND

Titanium oxide has a very wide range of industrial applications, being a typical additive used in cosmetics, ultraviolet shielding materials and silicone rubber, and in recent years it has come into even wider use as a starting material for photocatalysts, solar cells, dielectric starting materials and Li ion battery electrode materials. The substance "titanium oxide" is referred to as titanium dioxide in the Japanese Industrial Standards (JIS), but since the common term used is titanium oxide, this term will be used herein for titanium dioxide ($TiO_2$).

Increasing interest has recently been on titanium oxide as a high-performance dielectric starting material, such as a starting material for $BaTiO_3$. $BaTiO_3$ is obtained by the following reaction under heating.

$$BaCOs + TiO_2 \rightarrow BaTiO_3 + CO_2$$

This is considered a solid state reaction, with $BaCO_3$ first decomposing at high temperature to generate $BaO$, and the $BaO$ diffusing and being solid solved into the $TiO_2$ particles to form $BaTiO_3$. The sizes of the $BaTiO_3$ particles are therefore governed by the sizes of the $TiO_2$ particles. The progressive downsizing of stacked ceramic condensers in recent years has led to demand for thinner dielectric layers, and therefore micronization and homogenization of $BaTiO_3$ particles has become indispensable. When $BaTiO_3$ particles are present with sizes larger than the dielectric layer thickness, short circuiting may occur in the stacked ceramic condenser, potentially leading to device malfunction. It is therefore necessary to micronize and homogenize the $TiO_2$ starting material for $BaTiO_3$, preferably without inclusion of coarse $TiO_2$ particles. The same requirement to micronize and homogenize titanium oxide particles also applies for other uses as well, with the same desirability to avoid inclusion of coarse particles.

Production methods for titanium oxide are largely classified as liquid phase methods involving hydrolysis of titanium tetrachloride or titanium sulfate, and gas phase methods in which titanium tetrachloride is reacted with oxygen or water vapor at high-temperature.

Liquid phase methods are advantageous in that they allow production of titanium oxide under relatively mild conditions to easily obtain fine primary particles, but the titanium oxide that is obtained as a sol or slurry is limited in its range of uses in that state. The sol or slurry must be dried to be used as titanium oxide particles, and it generally undergoes extensive aggregation after drying. Titanium oxide particles with extensive aggregation are problematic due to non-uniform particle size distribution. The titanium oxide particles obtained by drying also have a problem of poor dispersibility when dispersed in solvents. Poor dispersibility causes the starting components to become maldistributed without adequate mixture of the titanium oxide particles and other starting materials when the starting materials are mixed to produce $BaTiOs$, and this can produce uneven growth during reaction and result in variation in quality.

With gas phase methods, on the other hand, it is possible to adjust the primary particle sizes of the titanium oxide by varying the production conditions such as temperature. Gas phase methods are also less likely to create the problems associated with liquid phase methods, because they do not use solvents and yield titanium oxide in the form of powder. Moreover, since reaction in gas phase methods is conducted at higher temperature than in liquid phase methods, the resulting titanium oxide is characteristically of higher crystallinity.

However, the higher temperature of reaction in gas phase methods compared to liquid phase methods creates a higher temperature in the reaction tube or in the cooling tube after introduction of the cooling medium, or a longer residence time of the titanium oxide particles, which can cause the titanium oxide particles to receive too much heat and can promote excessive sintering of the titanium oxide particles, thus making it difficult to obtain titanium oxide microparticles and also resulting in a non-uniform particle size distribution. If the reaction zone temperature is lowered to avoid sintering of the titanium oxide, the titanium oxide may not undergo sufficient nucleation, making it difficult to obtain microparticles or producing only low-crystalline titanium oxide. Immediate cooling of the reaction gas using a cooling medium can inhibit sintering of the titanium oxide to obtain titanium oxide microparticles. Without immediate cooling or with uneven cooling, however, sintering between the particles becomes non-uniform, making it impossible to obtain homogeneous titanium oxide microparticles.

PTL 1 describes a method for producing titanium oxide particles wherein titanium halide gas and oxidizing gas are reacted under specified conditions to obtain homogeneous titanium oxide particles by a gas phase method.

PTL 2 describes a method for producing titanium oxide particles wherein $TiCl_4$ vapor and an oxidizing agent are reacted, introducing the oxidizing agent into the reaction tube in a laminar flow to inhibit scale formation on the reaction tube and reduce the number of metal oxide particles with diameters of greater than 100 nm, for the purpose of obtaining homogeneous titanium oxide particles without coarse particles by a gas phase method.

[CITATION LIST]

[PATENT LITERATURE]

[PTL 1] Japanese Unexamined Patent Publication No. 2006-265094
[PTL 2] Japanese Unexamined Patent Publication No. 2005-209877

SUMMARY

[TECHNICAL PROBLEM]

It is desirable to obtain titanium oxide particles with excellent homogeneity and dispersibility as mentioned above, and titanium oxide particles obtained by gas phase methods have the advantage of superior homogeneity and dispersibility compared to those obtained by liquid phase methods. The present inventors have studied production of titanium oxide particles by gas phase methods with the aim of producing titanium oxide particles with more excellent homogeneity and dispersibility, but it has been found that notable coarsening of titanium oxide particles occurs even when titanium oxide microparticles with excellent homogeneity and dispersibility are produced by gas phase methods, leaving the unavoidable problem of inclusion of coarse particles in the titanium oxide microparticles.
The present invention has been devised with the goal of solving this problem, and its object is to provide titanium oxide microparticles with few coarse particles and excellent homogeneity and dispersibility, obtained using a gas phase method, and a method for their production, as well as to provide a slurry, dispersion, composition and dielectric starting material that include the titanium oxide particles.

[SOLUTION TO PROBLEM]

As a result of much research on this issue, the present inventors have completed this invention after finding that, in the case of PTL 1, no measures are proposed against adhesion of titanium oxide onto the reactor walls, and as a result, titanium oxide adheres onto the reactor walls, the adhesion and retention of titanium oxide particles onto the reactor walls resulting in inclusion of sintered coarse particles, and in the case of PTL 2, there are problems of productivity and quality since it is necessary to reduce the Reynolds number of the oxidant gas, resulting in poor miscibility of the starting materials, a low conversion rate and a non-uniform particle diameter. The present inventors also found that during the process of reacting gas containing titanium tetrachloride and inert gas with gas containing oxidizing gas in the reaction tube to produce titanium oxide particles, by introducing a purge medium along the tube walls under specific conditions after the gas containing titanium tetrachloride and the gas containing oxidizing gas have been introduced into the reaction tube and reacted, adhesion of particles onto the tube walls can be inhibited and thereby titanium oxide particles having few coarse particles, with excellent homogeneity and preferably excellent dispersibility are produced.
The present invention provides at least the following aspects, which are not limitative.

(Aspect 1)

Titanium oxide particles, wherein the D90 (LD)/D50 (LD) ratio of the titanium oxide particles as measured by laser diffraction/scattering analysis is greater than 1.0 and 2.0 or lower, and the particle concentration of coarse particles having a size exceeding 16 times the size of D50 (SEM) of primary particles of the titanium oxide particles as observed under a field emission scanning electron microscope is 20 ppm or lower (based on the number of particles).

(Aspect 2)

Titanium oxide particles according to aspect 1, wherein the D90 (SEM)/D50 (SEM) ratio of primary particles of the titanium oxide particles as observed under a field emission scanning electron microscope is greater than 1.0 and 2.0 or lower.

(Aspect 3)

Titanium oxide particles according to aspect 1 or 2, wherein the [D90 (SEM) - D10 (SEM)]/D50 (SEM) ratio of primary particles of the titanium oxide particles as observed under a field emission scanning electron microscope is 0.82 or lower.

(Aspect 4)

Titanium oxide particles according to any one of aspects 1 to 3, wherein the D99 (SEM)/D50 (SEM) ratio of primary particles of the titanium oxide particles as observed under a field emission scanning electron microscope is greater than 1.0 and 2.0 or lower.

(Aspect 5)

Titanium oxide particles according to any one of aspects 1 to 4, wherein the D90 (DLS)/D50 (DLS) ratio of the titanium oxide particles as measured by dynamic light scattering is greater than 1.0 and 2.0 or lower.

(Aspect 6)

Titanium oxide particles according to any one of aspects 1 to 5, wherein the D90 (DLS)/D90 (SEM) ratio, as the ratio of the D90 (DLS) for the titanium oxide particles as measured by dynamic light scattering and the D90 (SEM) for primary particles of the titanium oxide particles as observed under a field emission scanning electron microscope, is 2.2 or lower.

(Aspect 7)

Titanium oxide particles according to any one of aspects 1 to 6, wherein the D90 (LD) for the titanium oxide particles as measured by laser diffraction/scattering analysis is 3000 nm or lower.

(Aspect 8)

Titanium oxide particles according to any one of aspects 1 to 7, wherein the D90 (DLS) for the titanium oxide particles as measured by dynamic light scattering and the D90 (SEM) for primary particles of the titanium oxide particles as observed under a field emission scanning electron microscope, are 200 nm or lower, and the D50 (SEM) is 10 to 150 nm.

(Aspect 9)

Titanium oxide particles according to any one of aspects 1 to 8, wherein the anatase content is 70% or greater.

(Aspect 10)

Titanium oxide particles according to any one of aspects 1 to 9, wherein the BET specific surface area is 5 to 200 $m^2$/g.

(Aspect 11)

Titanium oxide particles according to any one of aspects 1 to 10, wherein the Cl content of the titanium oxide particles as measured by silver nitrate potentiometric titration is 0.2% or lower.

(Aspect 12)

Titanium oxide particles according to any one of aspects 1 to 11, wherein the Na, Al, S, Fe, Ni, Cr, Nb and Zr contents are each 10 ppm by mass or lower, and the Si and C contents are each 500 ppm by mass or lower.

(Aspect 13)

A method for producing titanium oxide particles wherein, for a step in which a source gas comprising titanium tetrachloride and an inert gas, and an oxidizing gas comprising either or both of oxygen gas and water vapor in addition to an inert gas, are introduced into a reaction tube and are reacted and then cooled to produce titanium oxide particles, a blowing outlet for a purge medium is provided on the inner wall of the reaction tube and the purge medium is introduced in a swirling manner along the inner wall of the reaction tube, with the blowout angle $\alpha$ of the purge medium from the inner wall of the reaction tube being 50° or greater with respect to a line connecting the blowing outlet of the purge medium and the center axis line of the reaction tube, on a plane projected onto a cross-section of the reaction tube that is perpendicular to the axis line of the reaction tube, and the blowout flow velocity (B) of the purge medium being 35 m/s or greater.

(Aspect 14)

The method for producing titanium oxide particles according to aspect 13, wherein the blowout angle $\beta$ of the purge medium from the inner wall of the reaction tube with respect to the direction of the axis line of the reaction tube, on a plane projected onto a longitudinal section of the reaction tube that includes the axis line of the reaction tube, is 60° or greater, where 0° is the downstream side of the reaction gas flow.

(Aspect 15)

The method for producing titanium oxide particles according to aspect 13 or 14, wherein the purge medium is introduced so that the ratio B/A is 0.5 or greater, where A is the flow velocity of the reaction gas formed from the source gas and the oxidizing gas in the reaction tube and B is the blowout flow velocity of the purge medium.

(Aspect 16)

A slurry that includes titanium oxide particles according to any one of aspects 1 to 12.

(Aspect 17)

A dispersion that includes titanium oxide particles according to any one of aspects 1 to 12.

(Aspect 18)

A composition that includes titanium oxide particles according to any one of aspects 1 to 12.

(Aspect 19)

A dielectric starting material that includes titanium oxide particles according to any one of aspects 1 to 12.

[ADVANTAGEOUS EFFECTS OF INVENTION]

According to the invention it is possible to provide titanium oxide particles with few coarse particles and excellent homogeneity and also preferably excellent dispersibility, and a method for their production, as well as to provide a slurry, dispersion, composition and dielectric starting material that include the titanium oxide particles.

BRIEF DESCRIPTION OF DRAWINGS

Figs. 1(a) and 1(b) are photomicrographs of titanium oxide particles of the invention.
Fig. 2 is a schematic diagram illustrating a preferred example of the first step in the method for producing titanium oxide particles of the invention.
Fig. 3 is a schematic cross-sectional diagram illustrating a preferred example of the first step in the method for producing titanium oxide particles of the invention.
Fig. 4 is a schematic longitudinal section diagram illustrating a preferred example of the first step in the method for producing titanium oxide particles of the invention.

DESCRIPTION OF EMBODIMENTS

Unless otherwise specified, or unless suggested otherwise by context, the numerical values obtained by the measurements described herein are determined as the numerical values in consideration of significant digits. For example, 0 ppm is understood to be less than 0.5 ppm.

As used herein, the notations D10, D50, D90 and D99 in D10 (SEM), D50 (SEM), D90 (SEM), D99 (SEM), D50 (LD), D90 (LD), D50 (DLS) and D90 (DLS) are particle sizes (particle diameters) for which the cumulative total of the reference amount from order of smallest particle size in the respective cumulative particle size distribution is 10%, 50%, 90% and 99%, respectively, of the total integrated value, based on number, volume, mass or number of moles, while SEM refers to measurement with a field emission scanning electron microscope, LD refers to laser diffraction/scattering analysis, and DLS refers to dynamic light scattering.

In the field of microparticles to which the present invention relates, the homogeneity and dispersibility of titanium oxide particles is preferably judged comprehensively, by carrying out SEM observation, laser diffraction/scattering analysis measurement and dynamic light scattering measurement, as described below.

[Titanium oxide particles]

Titanium oxide particles according to one embodiment of the invention are titanium oxide particles wherein the D90 (LD)/D50 (LD) ratio of the titanium oxide particles as measured by laser diffraction/scattering analysis is greater than 1.0 and 2.0 or lower, and the particle concentration of coarse particles having a size exceeding 16 times the size of D50 (SEM) (i.e., $16 \times$ D50 (SEM)) (based on the number of particles) is 20 ppm or lower (based on the number of particles). Such titanium oxide particles have excellent homogeneity and dispersibility and can be suitably produced by the method for producing titanium oxide particles described below.

If the D90 (LD)/D50 (LD) value of the titanium oxide particles is greater than 1.0 and 2.0 or lower as measured by laser diffraction/scattering analysis then the particle sizes of the titanium oxide particles will have excellent homogeneity, the value being more preferably 1.8 or lower, even more preferably 1.6 or lower and most preferably 1.5 or lower. A value of 2.0 or lower is preferred for a homogeneous particle size distribution. The value may also be 1.1 or higher.

If the particle concentration of coarse particles having a size exceeding 16 times the size of D50 (SEM) ($16 \times$ D50 (SEM)) is 20 ppm or lower, then there will be fewer coarse titanium oxide particles. Titanium oxide particles with a uniform particle size and few coarse particles have higher quality and homogeneity as required for titanium oxide particles, and are therefore excellent and useful for a wide range of purposes including cosmetics, ultraviolet shielding materials, additives for silicone rubber, photocatalysts, solar cells, dielectric starting materials and Li ion battery electrode materials.

· D50 (LD) and D90 (LD) based on laser diffraction/scattering

Titanium oxide particles generally form secondary particles by aggregation of their primary particles. The D50 and D90 particle sizes for aggregated titanium oxide particles (primary particles and secondary particle aggregates) are measured using a laser diffraction particle size distribution apparatus ("D50 (LD)" and "D90 (LD)" are used herein for the above-mentioned D50 and D90, respectively). According to Saito Sinroku, ed., "Supermicroparticles Handbook", Fuji TechnoSystems, p93, (1990), the method of measuring the particle size distribution of particles may be a precipitation method, microscope method, laser diffraction/scattering analysis method (light scattering method) or direct counting method, among which precipitation and direct counting methods, which only allow measurement of particle diameters of several hundred nm and larger, are not suitable for measurement of the particle size distribution of microparticles with particle diameters of 100 nm and smaller. A microscope method cannot be considered a preferred method of measurement due to variation in measured values depending on sample obtainment and pretreatment of samples. In contrast, laser diffraction/scattering analysis (light scattering method) is suitable for microparticles as it allows measurement of particle diameters in the range of several nm to several $\mu$m . Measurement of particle size distribution by laser diffraction/scattering analysis (light scattering method) is explained in detail under "Examples".

The D50 (LD) of the titanium oxide particles according to one embodiment of the invention is preferably 1000 nm or lower and more preferably 500 nm or lower. The D50 (LD) corresponds to the effective diameter (aggregate diameter) when dissolved in a solvent, with a smaller value indicating more satisfactory dispersibility.

A smaller D90 (LD) value indicates weaker cohesion of the titanium oxide particles, and more satisfactory dispersibility in solvents. The D90 (LD) of the titanium oxide particles according to one embodiment of the invention is preferably 3000 nm or smaller, more preferably 2000 nm or smaller, even more preferably 1000 nm or smaller and yet more preferably 600 nm or smaller.

· D10 (SEM), D50 (SEM), D90 (SEM) and D99 (SEM) of primary particles of titanium oxide particles by field emission scanning electron microscope

According to one embodiment of the invention, the D90 (SEM)/D50 (SEM) ratio of primary particles of titanium oxide particles as observed under a field emission scanning electron microscope is greater than 1.0 and 2.0 or lower. If the ratio is greater than 1.0 and 2.0 or lower, then a uniform particle size can also be obtained for the slurried and dispersed titanium oxide particles. From the same viewpoint, the D90 (SEM)/D50 (SEM) ratio is preferably greater than 1.2, and more preferably 1.3 or greater, 1.4 or greater or 1.5 or greater. Details regarding the measurement procedure are described under the "Examples".

A smaller value for D99 (SEM)/D50 (SEM) for primary particles of titanium oxide particles observed under a field emission scanning electron microscope, according to one embodiment of the invention, is interpreted as a more uniform primary particle size distribution. The D99 (SEM)/D50 (SEM) value for the titanium oxide particles is greater than 1.0 and 2.0 or lower, preferably 1.9 or lower, more preferably 1.8 or lower and most preferably 1.7 or lower. A value of 2.0 or lower is preferred for a homogeneous particle size distribution. The value may also be 1.1 or higher.

While D90 (SEM)/D50 (SEM) can be used as an index of the homogeneity of particle size distribution for particles larger than D50 (SEM), as mentioned above, [D90 (SEM) - D10 (SEM)]/D50 (SEM) is sometimes used as an index for evaluating the overall homogeneity of particle size distribution including particles with sizes in a range from smaller than to larger than D50 (SEM), and this can also be applied for the present disclosure, with a smaller value being judged as a more uniform particle size distribution. The value of [D90 (SEM) - D10 (SEM)]/D50 (SEM) according to one embodiment of the invention is preferably 0.82 or lower and more preferably 0.80 or lower. The [D90 (SEM) - D10 (SEM)] /D50 (SEM) value may also be 0.75 or lower or 0.71 or lower.

The D50 (SEM) of the titanium oxide particles according to one embodiment of the invention is preferably 10 to 100 nm, more preferably 10 to 50 nm and even more preferably 10 to 30 nm. Such titanium oxide particles are suitable for use in photocatalysts, solar cells and dielectric materials which require particle diameters on the submicron level.

A small D90 (SEM) value limits the number of primary particles larger than D90 (SEM), and therefore the D90 (SEM) of the titanium oxide particles of this embodiment of the invention is preferably 200 nm or lower, more preferably 100 nm or lower and even more preferably 50 nm or lower.

· D50 (DLS) and D90 (DLS) by dynamic light scattering

The titanium oxide particles to be measured are disaggregated, and the D50 and D90 of the resultant titanium oxide particles are measured by dynamic light scattering (as used herein, the above-mentioned D50 and D90 refer to D50 (DLS) and D90 (DLS), respectively). The D50 (DLS) and D90 (DLS) are measured using a dynamic light scattering particle size distribution apparatus. Here, "disaggregation" refers to processing in which secondary particles are subjected to separation treatment without destruction of the primary particles, as opposed to pulverizing in which the primary particles are destroyed. The particle size distribution of disaggregated particles is an indicator of the ease of disaggregation and the dispersibility of the secondary particles, and it also reflects the state of bonding between the primary particles and the looseness of the aggregated particles.

Disaggregation is carried out by a method similar to pulverization (especially ball mill processing), but with adjustment of the dimensions and weights of the balls and the processing time so that the secondary particles are separated without destroying the primary particles. For the D50 (DLS) and D90 (DLS) by dynamic light scattering, 300 ml of purified water is added to 100 g of titanium oxide particles, a polycarboxylic acid-type polymer dispersant (acrylic acid polymer, 100% ammonium salt) is added at 5% with respect to the weight of the titanium oxide, as a dispersant, to prepare a slurry which is then charged into a 1 L ball mill container (polypropylene, dimensions: $\varphi$92 mm $\times$ 198 mm), 1.2 kg of 0.5 mm$\varphi$ zirconia balls (YTZ balls by Nikkato Corp.) are added, and the mixture is placed on the mount of the ball mill and rotated at 7 rpm for 72 hours to obtain a disaggregated titanium oxide slurry. The titanium oxide slurry obtained in this manner is measured for particle size distribution (volume cumulative particle size distribution) using a dynamic light scattering particle size distribution analyzer. An ELS-Z by Otsuka Electronics Co., Ltd., for example, may be used as the particle size distribution analyzer. When pulverization has occurred during the disaggregation, the pulverization reduces the primary particle size of the titanium oxide in the slurry and the BET specific surface area ($m^2$/g) increases. Therefore, the fact that pulverization has not occurred during the disaggregation can be confirmed, when the BET specific surface area of the titanium oxide particles obtained by drying at 100°C or lower the slurry after the disaggregation and the BET specific surface area of the titanium oxide particles before the disaggregation are compared and there is no significant difference between their BET specific surface areas. The significant difference here is a difference in the BET specific surface area of the titanium oxide powder before and after disaggregation that exceeds the range of variation deviation during measurement. The BET specific surface area measuring device used may be a MACSORB specific surface area measuring device by Mountech Co., Ltd., for example. Details regarding the measurement procedure are described under the "Examples".

Since a smaller value for D90 (DLS)/D50 (DLS) is interpreted as a more uniform particle size distribution of the titanium oxide particles, the D90 (DLS)/D50 (DLS) of the titanium oxide particles according to one embodiment of the invention is preferably greater than 1.0 and 2.0 or lower, more preferably 1.8 or lower, even more preferably 1.7 or lower and most preferably 1.6 or lower. A value of 2.0 or lower is preferred for a homogeneous particle size distribution. The value may also be 1.1 or higher.

Since a smaller value for D90 (DLS) can be interpreted as weaker cohesion between the titanium oxide particles, and more satisfactory ease of disaggregation, the D90 (DLS) of the titanium oxide particles according to one embodiment of the invention is preferably 500 nm or lower, more preferably 300 nm or lower, even more preferably 200 nm or lower and most preferably 100 nm or lower.

According to one embodiment of the invention, both the D90 (DLS) and D90 (SEM) values are preferably 200 nm or lower and more preferably 100 nm or lower. The D90 (DLS)/D90 (SEM) ratio according to one embodiment is preferably 2.2 or lower, and may be 1.1 to 2.0. A ratio of 2.2 or lower indicates a greater proportion of greater looseness secondary particles, helping to prevent short circuiting when used in a dielectric material of a stacked ceramic condenser. The D90 (DLS)/D90 (SEM) value is more preferably 2.1 or lower and even more preferably 2.0 or lower.

The D50 (DLS) of the titanium oxide particles according to one embodiment is preferably 10 to 150 nm, more preferably 10 to 100 nm and even more preferably 10 to 65 nm. A smaller D50 (DLS) tends to result in more satisfactory dispersion in an affinity solvent.

· Particle concentration of titanium oxide coarse particles

The coarse particles among the titanium oxide particles are defined based on the dimensions of the primary particles as measured with a field emission scanning electron microscope (SEM), and the content of the coarse titanium oxide particles is also measured using a field emission scanning electron microscope. Details regarding the measurement procedure are described under the "Examples".

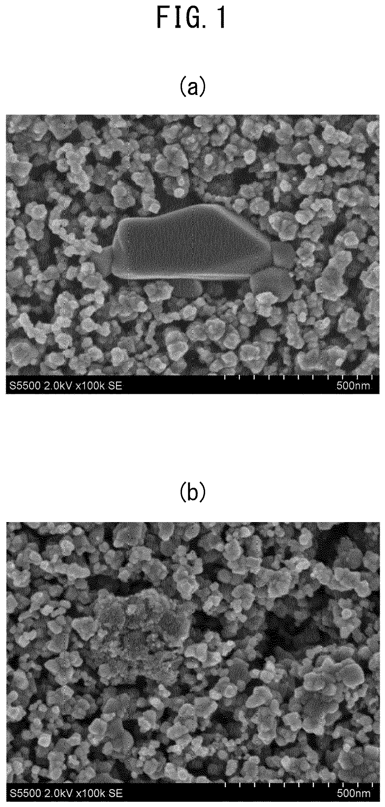

Coarse primary particles and aggregated particles (secondary particles) can be distinguished by their appearance, and for example, coarse particles have the appearance shown at center in Fig. 1(a). Particles formed by aggregation of fine primary particles as in Fig. 1(b) are considered to be aggregated particles and are not counted as coarse particles. When it is difficult to discriminate between coarse particles and aggregated particles, it is preferred to increase the observation magnification to a degree allowing them to be discriminated.

Coarse titanium oxide particles, for the present purpose, are particles whose primary particle size exceeds 16 times the size of D50 (SEM) (16 × D50 (SEM)), as measured by the method described above. Titanium oxide particles according to one embodiment of the invention are titanium oxide particles wherein the particle concentration of primary particles having a size exceeding 16 times the size of D50 (SEM) (based on the number of particles) is 20 ppm or lower, preferably 10 ppm or lower and more preferably 5 ppm or lower.

The thickness of a state-of-the-art dielectric material in a stacked ceramic condenser is considered to be less than 1 $\mu$m, and therefore the titanium oxide of this embodiment preferably does not include particles beyond the specified dimensions. In a dielectric layer used inside a stacked ceramic condenser, the insulation resistance tends to be lower in a dielectric layer containing coarse particles compared to a dielectric layer without coarse particles, increasing the likelihood of malfunction (short circuiting) due to poor insulation. A low particle concentration of coarse particles beyond the specified dimensions may be a preferred characteristic for a variety of uses of titanium oxide.

· Anatase content

The titanium oxide is preferably the anatase form for photoelectrochemical activity, as described in PTL 1. The anatase content (molar) of titanium oxide according to one embodiment of the invention is preferably 70% or greater, more preferably 75% or greater and even more preferably 95% or greater. It is preferably 70% or greater to adequately exhibit photoelectrochemical activity. The anatase content is the content of anatase crystals in the titanium oxide.

· BET Specific surface area

The BET specific surface area ($m^2$/g) of the titanium oxide particles according to one embodiment is preferably 5 to 200 $m^2$/g, more preferably 10 to 150 $m^2$/g and even more preferably 20 to 100 $m^2$/g, from the viewpoint of obtaining titanium oxide particles with excellent homogeneity and dispersibility. A BET specific surface area of greater than 5 $m^2$/g is preferred for obtaining microparticles. A BET specific surface area of lower than 200 $m^2$/g is preferred for obtaining a suitable BET specific surface area.

· Chlorine (Cl) content

The Cl (chlorine atom) concentration of the titanium oxide particles according to one embodiment is preferably 0.20 mass% or lower, as this will reduce problems in subsequent steps when the titanium oxide particles are used as a starting material. For example, when titanium oxide particles having a Cl concentration greater than 0.20 mass% are used as a starting material for BaTiOs, this can be a cause of flux during firing. The melted flux readily localizes, with considerable aggregation of the localized sections, while variation in quality occurs between the other sections. Upon aggregation, the $BaTiO_3$ particles produce crystal growth and form abnormal particles, thus lowering the dielectric characteristic of the $BaTiO_3$. From the same viewpoint, the Cl content of the titanium oxide particles is more preferably 0.15 mass% or lower and even more preferably 0.10 mass% or lower.

· Content of other impurities

The contents of Na, Al, S, Fe, Ni, Cr, Nb and Zr in the titanium oxide particles of one embodiment are preferably each 50 ppm by mass or lower, and more preferably 10 ppm by mass or lower. The contents of Si and C in the titanium oxide particles are preferably each 500 ppm by mass or lower, and more preferably 100 ppm by mass or lower. Reducing the impurities can minimize problems in subsequent steps when the titanium oxide is used as a starting material. For example, when the titanium oxide particles are used as a starting material to obtain a dielectric material, this reduces impairment of the dielectric characteristic by the presence of impurities. When the titanium oxide particles are used for a photocatalyst or solar cell, it prevents or inhibits reduced transparency caused by coloration with Fe, or prevents or inhibits loss of function as a photocatalyst or solar cell by lattice defects due to Al or S.

The titanium oxide particles have a titanium oxide content of preferably 99.0 mass% or greater and more preferably 99.9 mass% or greater. This will increase the purity and reduce the effect of impurities.

[Slurry, dispersion, composition and dielectric starting material]

A slurry, dispersion, composition or dielectric starting material according to one embodiment includes the aforementioned titanium oxide particles. A slurry is a mixture of particles in a liquid, but the term usually refers to a fluid with high viscosity (muddiness). The term "dispersion" is generally used for any mixture of solid particles dispersed in a liquid, including those with low concentration. A composition is any composition composed of multiple components. A dielectric starting material is a material used for production of a dielectric material. The slurry, dispersion, composition and dielectric starting material of one embodiment are suitable for purposes including photocatalysts, solar cells and dielectric materials. A slurry, dispersion or composition including titanium oxide particles has a wide range of other known uses. The method of using the titanium oxide particles of the disclosure to produce a slurry, dispersion, composition or dielectric starting material may be a publicly known method. Since a slurry, dispersion, composition or dielectric starting material comprising the titanium oxide particles of the embodiment titanium oxide particles does not include coarse particles, the final product can exhibit excellent homogeneity and quality. The lack of coarse particles helps to prevent short circuiting and improve quality for dielectric material thin-films in stacked ceramic condensers. One example of a stacked ceramic condenser preferably has a very minimal content of coarse particles with sizes of 0.7 $\mu$m or greater or even 0.5 $\mu$m or greater.

[Method for producing titanium oxide particles]

A method for producing titanium oxide particles according to one embodiment of the invention will now be described.

In the production method according to one embodiment, in a step in which a source gas (G1) comprising titanium tetrachloride and an inert gas, and an oxidizing gas (G2) comprising either or both oxygen gas and water vapor in addition to an inert gas, are introduced into a reaction tube and are reacted and then cooled to produce titanium oxide particles, a blowing outlet for a purge medium is provided on the inner wall of the reaction tube and the purge medium is introduced in a swirling manner along the inner wall of the reaction tube, with the blowout angle $\alpha$ of the purge medium from the inner wall of the reaction tube being 50° or greater with respect to a line connecting the blowing outlet of the purge medium and the center axis line of the reaction tube, on a plane projected onto a cross-section of the reaction tube that is perpendicular to the axis line of the reaction tube, and the blowout flow velocity (B) of the purge medium being 35 m/s or greater.

If the blowout angle $\alpha$ of the purge medium is 50° or greater and the blowout flow velocity (B) of the purge medium is 35 m/s or greater with respect to the inner wall of the reaction tube, then it will be possible to introduce a purge medium in the reaction tube while swirling along the reactor walls, promoting formation of a purge medium layer near the reactor walls which will prevent adhesion and residue of titanium oxide powder on the walls and inhibit sintering of the titanium oxide.

A method for producing titanium oxide particles according to this embodiment will now be described in greater detail.

(Source gas G1)

The source gas G1 comprises titanium tetrachloride and an inert gas. From the viewpoint of economy, the supply rate of the titanium tetrachloride is preferably 100 mol/hr or greater and more preferably 200 mol/hr or greater. From the viewpoint of reducing sintering grain growth by the heat of reaction, it is preferably 5000 mol/hr or lower, more preferably 3000 mol/hr or lower and even more preferably 2000 mol/hr or lower. The content of inert gas per 1 mol of titanium tetrachloride in the source gas G1 is preferably 0.01 mol or greater, more preferably 0.1 mol or greater and even more preferably 1 mol or greater, from the viewpoint of reducing the particle diameters of the resulting titanium oxide particles. From the viewpoint of accelerating the reaction, it is preferably 50 mol or lower, more preferably 10 mol or lower and even more preferably 5 mol or lower. The inert gas may be nitrogen gas, helium gas or argon gas, with nitrogen gas being preferred from an economical viewpoint. The G1 is preferably introduced into the reaction tube after heating (preheating) at 600°C or above and below 1,200°C, more preferably 700°C or above and below 1200°C, and even more preferably 800°C or above and below 1200°C.

(Oxidizing gas G2)

The oxidizing gas G2 comprises either or both oxygen gas and water vapor, and an inert gas. The total amount of the oxidizing gas and water vapor in the oxidizing gas G2 is preferably 2 to 150 mol, more preferably 2 to 50 mol and even more preferably 2 to 15 mol, with respect to 1 mol of titanium tetrachloride in the source gas G1. Increasing the amount of oxidizing gas G2 results in a greater number of generated nuclei which aids formation of ultrafine particles while shortening the high-temperature residence time, thereby improving the homogeneity of the primary particle size. However, productivity is impaired if the amount exceeds 150 mol. If either or both the oxidizing gas and water vapor is less than 2 mol with respect to 1 mol of titanium tetrachloride, the resulting titanium oxide will have more oxygen defects and will tend to undergo coloration. The proportion of either or both the oxygen gas and water vapor in the oxidizing gas G2 comprising an inert gas is preferably 80 to 99.5 mol% and more preferably 90 to 99.5 mol%. G2 is preferably introduced into the reaction tube after heating (preheat) at 600°C or above and below 1,200°C. The inert gas is preferably the same as explained above for the source gas G1. The inert gas is also preferably the same as in the source gas G1.

(Reaction tube)

In order to ensure a uniform flow of the source gas, oxidizing gas, purge medium and reaction gas, the reaction tube may be a horizontal reaction tube, but it is preferably a vertical reaction tube with a circular cross-section, and more preferably one that allows the preheated source gas and oxidizing gas to be introduced from respective supply tubes at the top end toward the bottom end of the heated reaction tube, with the purge medium being introduced from a side wall of the reaction tube along the reactor walls while causing the purge medium to swirl along the reactor wall. The direction in which the purge medium is introduced into the reaction tube is preferably 50° or greater for the above-mentioned angle $\alpha$, and 60° or greater for the above-mentioned angle $\beta$. The source gas and oxidizing gas introduced into the reaction tube, and a reaction gas mixture formed therefrm, flow downward in the reaction tube, and the reaction is suspended by cooling the reaction gas by introduction of a cooling medium. The angle of introduction of the coolant gas may be perpendicular to the flow of the reaction gas, toward the center of the circular cross-section of the reaction tube, with no limitation to this angle, however. The cooled titanium oxide particles and residual gas are discharged out from the bottom end of the reaction tube. The reaction gas may also contain some of the titanium oxide reaction product.

The source gas G1 and oxidizing gas G2 are introduced from an inlet of the reaction tube (on the end) toward the axis line of the reaction tube, and preferably the ratio (S1/S2), as the ratio of the cross-sectional area (S1) of the reaction tube inlet (on the end or cross-sectional surface of the reaction tube) and the total cross-sectional area of (S2) of the outlets of the inlet tubes for the source gas G1 and oxidizing gas G2, is 1 to 7.0. Within this range it will be possible to approximate a uniform reaction zone temperature and hot zone time. The cross-sectional area (S1) at the inlet of the reaction tube is the cross-sectional area including the cross-sectional areas (S2) of the outlets of the inlet tubes for the source gas G1 and oxidizing gas G2. The (S1/S2) ratio is more preferably 1 to 2.5, 1 to 2.0 or 1 to 1.5. The source gas G1 and oxidizing gas G2 supplied through the inlet tubes are mixed and react inside the reaction tube, but for uniform growth of the titanium oxide particles it is preferred to make a reaction zone temperature and hot zone time uniform as much as possible. When the source gas G1 and oxidizing gas G2 are introduced from the end of the reaction tube, it is impossible for the cross-sectional area (S1) of the reaction tube to be smaller than the total cross-sectional area (S2) of the starting material inlet tubes (S1/S2 < 1). If the S1/S2 ratio exceeds 2.5, however, the effect of diffusion in the vertical direction with respect to the gas flow increases, and therefore the primary particle size may become non-uniform. It is preferred for the source gas G1 and oxidizing gas G2 to be introduced into the reaction tube in the direction of gas flow in each reaction tube, though this is not limitative. With a S 1/S2 ratio exceeding 2.5 it has been considered difficult in the prior art to obtain a homogeneous primary particle size, but according to this embodiment it is possible to produce titanium oxide particles with few coarse particles by adjustment of the purge medium angle, even under conditions with a ratio exceeding 2.5.

(Reaction temperature and reaction time)

The temperature in the reaction zone in which the source gas G1 and oxidizing gas G2 are introduced is preferably 800°C or higher and lower than 1,200°C, and more preferably 800°C or higher and lower than 1,100°C. The reaction zone temperature is preferably 800°C or higher, since the reaction will proceed sufficiently and the particle size distribution of the titanium oxide particles will be uniform, resulting in high crystallinity. Increasing the reaction zone temperature will lead to completion of the reaction simultaneously with mixing, helping to accelerate uniform generation of nuclei and can narrow the reaction zone. On the other hand, a reaction tube internal temperature of below 1,200°C is preferred to promote suitable particle growth and obtain microparticles.

The time during which both the source gas G1 and oxidizing gas G2 in the reaction zone are at high-temperature of 800°C or higher and below 1,200°C is preferably 0.1 second or less, more preferably 0.03 second or less and even more preferably 0.02 second or less. A time of 0.1 second or less is preferred to avoid excessive particle growth. If the residence time in the high-temperature zone is lengthened without cooling of the reaction gas, the titanium oxide particles may undergo particle growth and sintering of the particles may progress.

The source gas G1 and oxidizing gas G2 introduced into the reaction tube are preferably introduced into the reaction tube after prior heating (preheating) to 600°C or higher and below 1,200°C, more preferably 800°C or higher and below 1,200°C, and even more preferably 800°C or higher and below 1,100°C. This allows more precise control of the temperature and reaction time of the source gas G1 and oxidizing gas G2 during the reaction, and the particle size distribution of the titanium oxide particles that are produced.

If the cooling zone following the reaction zone of the reaction tube has a temperature range exceeding 500°C, this can cause sintering of the particles. The residence time in a zone of 500°C or higher is preferably 1 second or less, more preferably 0.5 second or less and even more preferably 0.3 second or less. A time of 1 second or less is preferred to avoid excessive particle growth.

(Flow rate and flow velocity of source gas, oxidizing gas and reaction gas)

The flow rate of the source gas and oxidizing gas can be calculated from the rate of introduction (flow rate) through the reaction tube inlet and the cross-sectional area of the reaction tube. The flow rate ($m^3$/s) of the reaction gas flow after reaction between the source gas G1 and oxidizing gas G2 through the reaction tube can be calculated from the flow rates of the source gas G1 and oxidizing gas G2 and the reaction formula. The flow velocity (A) (m/s) of the reaction gas flow in the reaction tube may be conveniently calculated from the total flow rate ($m^3$/s) of the reaction gas flow after reaction between the source gas and oxidizing gas, and the cross-sectional area ($m^2$) of the reaction tube, assuming immediate reaction between the source gas and oxidizing gas.

The flow velocity (A) (m/s) of the reaction gas flow is preferably 1 m/s or greater, more preferably 10 m/s or greater and even more preferably 20 m/s or greater. With a flow velocity of lower than 1 m/s, the residence time of the reaction gas flow will be longer, potentially promoting oversintering and coarsening of the titanium oxide.

(Purge medium)

A method of introducing air or a gas such as nitrogen gas or carbon monoxide, or a method of spraying water, as a purge medium, may be employed. The purge medium is preferably at 0°C to 100°C and more preferably 10°C to 90°C. It is also preferred not to exceed the temperature of the cooling medium. A temperature within this range will not interfere with the cooling effect by the cooling medium.

(Purge method)

When the titanium oxide particles adhere and reside on the inner walls of the reaction tube they become coarsened by sintering particle growth, and their desorption from the inner walls and mixing in the producct can result in an uneven particle size distribution. Therefore if a purge medium blowing outlet is provided on the inner walls of the reaction tube or at the upper portion of the reaction tube, and the purge medium is introduced while swirling along the reactor walls, this will promote formation of a purge medium layer near the reactor walls which will prevent adhesion and residue of titanium oxide particles on the reactor walls and inhibit sintering of the titanium oxide particles. By being continuously or intermittently introduced, the purge medium can provide an effect of preventing adhesion of titanium oxide. The number of purge holes provided is preferably more than one. The form of the blowing outlet for the purge medium may be as a single hole or slit.

(Blow out conditions for purge medium (direction and flow velocity, etc.))

According to the invention, a purge medium blowing outlet is provided on an inner wall of the reaction tube for introduction of the purge medium in a swirling manner along the inner walls of the reaction tube. If the purge medium is swirling around the inner walls of the reaction tube inside the reaction tube, then adhesion of titanium oxide particles onto the reactor walls can be prevented.

If the direction in which the purge medium is blown out with respect to the reaction gas flow is not close to the inner walls of the reaction tube, a swirl flow will not form and an adequate effect of preventing titanium oxide adhesion on the reactor walls may not be obtained.

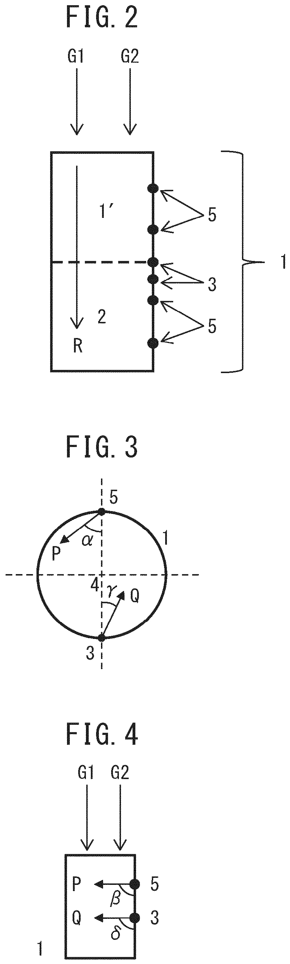

The blowing direction of the purge medium, according to the invention, is an angle $\alpha$ of 50° or greater (see Fig. 3) for blowing of the purge medium (as the direction of the axis line of the blowing outlet of the purge medium), with respect to a line connecting the purge medium blowing outlet with the reaction tube center axis line in a projection plane onto a perpendicular cross-section of the reaction tube with respect to the direction of reaction gas flow (the direction of the axis line of the reaction tube). The angle $\alpha$ is the angle for the blowing outlet set with respect to the reaction tube, in a projection plane onto a cross-section of the reaction tube, so as to match the blowing out angle of the purge medium from the blowing outlet. After the purge medium has been blown out from the blowing outlet it merges with the reaction gas flow, and therefore the direction of flow within the cross-section of the reaction tube may vary, but the angle $\alpha$ is the angle determined by the direction set for the purge medium blowing outlet. If the angle $\alpha$ is 50° or greater, the purge medium will be able to swirl near the inner walls of the reaction tube, to obtain a desirable effect of preventing titanium oxide adhesion onto the reactor walls. The angle $\alpha$ is preferably 60° or greater. The angle $\alpha$ will also generally be smaller than 90°.

In the projection plane onto the longitudinal section of the reaction tube including the direction of the axis line of the reaction tube (the direction of reaction gas flow), the direction in which the purge medium is blown out in the reaction tube may be the direction perpendicular to the axis line of the reaction tube (the direction of reaction gas flow) (which is the horizontal direction for a vertical reaction tube), and while the blowing direction perpendicular to the axis line of the reaction tube (the horizontal direction for a vertical reaction tube) is preferred, it may also be inclined from the blowing direction perpendicular to the axis line of the reaction tube, toward the direction of reaction gas flow. Blow out in the direction opposite from the direction of reaction gas flow is not inhibited or impossible but may create a reverse flow in the reaction gas. The blowout angle $\beta$ of the purge medium with respect to the direction of the axis line of the reaction tube in the projection plane onto the longitudinal section of the reaction tube (see Fig. 4), is preferably 60° or greater (an inclination angle of 30° or smaller with respect to the cross-section of the reaction tube), more preferably 70° or greater and even more preferably 80° or greater, where 0° is the direction in which the reaction gas flows in the direction of the axis line of the reaction tube. The blowout angle $\beta$ is most preferably 90° or smaller. Such an angle is preferred to obtain an excellent effect of preventing titanium oxide adhesion on the reactor walls.

The location where the purge medium blowing outlet is provided in the reaction tube may be any location that allows the purge medium to swirl along the inner wall of the reaction tube, and it may be a single location, or two or more locations, or 3 or more locations, or 4 or more locations, in the projection plane onto the cross-section of the reaction tube. For most cases, a smaller number of blowing outlets per circumference of the reaction tube cross-section may be used for a larger angle $\alpha$ or a greater purge medium flow velocity. The location where the purge medium blowing outlet is provided may be one level in the direction of the axis line of the reaction tube within the projection onto the longitudinal section of the reaction tube, but it is preferably 2 or more levels, or even 3 or more levels. The purge medium blowing outlet is preferably provided at several locations within the one or more identical cross-sections in the axis line direction, within the projection onto the longitudinal section of the reaction tube, but it may also be provided in a helical manner on the inner walls of the reaction tube, instead of at several locations in identical cross-sections.

The purge medium blowing outlet may be situated in any region from near the inlet of the source gas inside the reaction zone to just before the cooling zone, preferably also being provided in the cooling zone, so that a swirling flow of the purge medium is formed along the inner walls of the reaction tube inside these regions.

The blowout flow velocity (B) of the purge medium is 35 m/s or greater, preferably 50 m/s or greater and even more preferably 60 m/s or greater, to prevent adhesion of the generated titanium oxide particles onto the reactor walls. If it is 35 m/s or greater, the swirling flow along the tube walls will be sufficient, resulting in a more satisfactory effect of preventing titanium oxide adhesion onto the tube walls. The blowout flow velocity (B) of the purge medium is the purge gas flow velocity ($m^3$/s) divided by the cross-sectional area of the blowing outlet (units: m/s).

Where A represents the flow velocity (A) of the reaction gas formed from the source gas and oxidizing gas in the reaction tube, and B represents the blowout flow velocity (B) of the purge medium, the ratio B/A is preferably 0.5 or greater, more preferably 1.0 or greater, even more preferably 3.0 or greater and most preferably 5.0 or greater. If the blowout flow velocity (B) of the purge medium blown out in the direction of swirling is less than 0.5 with respect to the flow velocity (A) of the reaction gas flowing in the vertical direction, then a sufficient vector will not be formed in the direction of swirling and the purge medium may fail to adequately swirl, making it difficult to obtain homogeneous particles.

(Cooling medium)

A method of introducing air or a gas such as nitrogen gas or carbon monoxide, or a method of spraying water, as a cooling medium, may be employed. The cooling medium is preferably at 0°C to 100°C and more preferably 10°C to 90°C. The cooling effect is higher within this temperature range.

Blowout conditions for cooling medium (direction and flow velocity, etc.)

According to the invention, a blowing outlet is provided for the cooling medium on the inner walls of the reaction tube, whereby blowing out the cooling medium and mixing with the reaction gas allows the reaction gas to be cooled.
If the blowout direction of the cooling medium with respect to the reaction gas flow is not near the center of the reaction tube, the lack of mixture will result in an insufficient cooling effect.
The blowing direction of the cooling medium, according to the invention, is an angle γ of 0° or greater and less than 50° (see Fig. 3) for blowing of the cooling medium (as the direction of the axis line of the blowing outlet of the cooling medium), with respect to a line connecting the cooling medium blowing outlet with the reaction tube center axis line in a projection plane onto a perpendicular cross-section of the reaction tube with respect to the direction of reaction gas flow (the direction of the axis line of the reaction tube). The angle γ is the angle for the blowing outlet set with respect to the reaction tube, in a projection plane onto a cross-section of the reaction tube, so as to match the blowing out angle of the cooling medium from the blowing outlet. After the cooling medium has been blown out from the blowing outlet it merges with the reaction gas flow, and therefore the direction of flow within the cross-section of the reaction tube may vary, but the angle γ is determined by the direction set for the cooling medium blowing outlet. If the angle γ is 0° or greater and less than 50°, then the cooling medium can be circulated near the center of the reaction tube, sufficiently mixing with the reaction gas to obtain a favorable cooling effect. The angle γ is preferably less than 30°.
In the projection plane onto the longitudinal section of the reaction tube including the direction of the axis line of the reaction tube (the direction of reaction gas flow), the direction in which the cooling medium is blown out in the reaction tube may be the direction perpendicular to the axis line of the reaction tube (the direction of reaction gas flow) (which is the horizontal direction for a vertical reaction tube), and while the blowing direction perpendicular to the axis line of the reaction tube (the horizontal direction for a vertical reaction tube) is preferred, it may also be inclined from the blowing direction perpendicular to the axis line of the reaction tube, toward the direction of reaction gas flow. Blow out in the direction opposite from the direction of reaction gas flow is not inhibited or impossible but is not preferred as it may create a reverse flow in the reaction gas. The angle δ at which purge medium is blown out with respect to the direction of the axis line of the reaction tube in the projection plane onto the longitudinal section of the reaction tube (see Fig. 4), is preferably 60° or greater (an inclination angle of 30° or smaller with respect to the cross-section of the reaction tube), more preferably 70° or greater and even more preferably 80° or greater, for example, where 0° is the direction in which the reaction gas flows in the direction of the axis line of the reaction tube. The blowout angle δ is most preferably 90° or smaller. Such an angle is preferred for a superior cooling effect.
The reaction zone is the zone from the source gas inlet to the cooling medium blowing outlet in the reaction tube, while the cooling zone is the zone from the blowing outlet of the cooling medium to the exhaust port end. When multiple cooling medium blowing outlets are present, the reaction zone is the zone from the source gas inlet to the first cooling medium blowing outlet in the reaction tube, and the cooling zone is the zone from the first blowing outlet of the cooling medium to the exhaust port end.
The locations set in the reaction tube for the cooling medium blowing outlet may be one or more locations in the projection plane onto the cross-section of the reaction tube, so long as the cooling medium can mix with the reaction gas. The location where the cooling medium blowing outlet is provided may be one level in the direction of the axis line of the reaction tube within the projection onto the longitudinal section of the reaction tube, but it is preferably 2 or more levels, or even 3 or more levels. The cooling medium blowing outlet is preferably provided at multiple locations in one, or 2 or more identical cross-sections in the axis line direction, within the projection onto the longitudinal section of the reaction tube.

Schematic representation of purge method

Figs. 2 to 4 are schematic diagrams showing a preferred embodiment of the first step (reaction step).

Fig. 2 is a longitudinal section diagram from one side of the reaction tube 1 (a longitudinal section diagram including the axis line of the reaction tube). First, the source gas G1 and oxidizing gas G2 are introduced into the reaction tube 1. It is preferred to preheat the reaction zone 1' so that the internal temperature of the reaction zone 1' after introduction of the source gas G1 and oxidizing gas G2 into the reaction tube 1 is within a predetermined temperature range. The reaction gas (based on the source gas G1 and oxidizing gas G2) are allowed to reside in the reaction tube 1 for a predetermined time. A purge medium blowing outlet 5 is also provided on a wall of the reaction tube 1, continuously or intermittently introducing the purge medium. The cooling medium is blown out through the cooling medium blowing outlet 3, the reaction gas including the source gas and oxidizing gas is quenched, and the crude titanium oxide particles as the reaction product are discharged from the cooling zone 2 together with the cooling medium. The crude titanium oxide particles can be suitably produced in this manner. The resulting crude titanium oxide particles are fed to the second step (dechlorination step).

Fig. 3 is a cross-sectional view of the reaction tube 1 as seen from above (the source gas G1 and oxidizing gas G2 inlet end) (a cross-sectional view perpendicular to the axis line of the reaction tube), with arrows indicating a purge medium P introduced through the purge medium blowing outlet 5 of the reaction tube 1 and a cooling medium Q introduced through the cooling medium blowing outlet 3. The blowout angle of the purge medium is represented as $\alpha$, and the blowout angle of the cooling medium is represented as $\gamma$.

Fig. 4 is a longitudinal section diagram of the reaction tube 1 as seen from the side (a longitudinal sectional view including the axis line of the reaction tube), with arrows indicating a purge medium P introduced through the purge medium blowing outlet 5 of the reaction tube 1 and a cooling medium Q introduced through the cooling medium blowing outlet 3. The blowout angle of the purge medium is represented as $\beta$, and the blowout angle of the cooling medium is represented as $\delta$.

The swirling flow of the purge medium can effectively prevent adhesion, residue and particle growth of the titanium oxide particles on the tube walls, as a swirling flow under specific conditions near the walls of the reaction tube. The swirling flow of the purge medium is preferably formed not only in the reaction zone but also in the cooling zone.

The reactor is typically a type in which the source gas G1, the oxidizing gas G2 and the reaction gas R flow from top to bottom in the vertical direction, as described above, but when the reactor type is different, the method of determining the swirl angle may be altered accordingly. The direction in which the purge medium P is introduced does not need to be the same as described above, as it is sufficient if the angle $\beta$ for swirling of the purge medium P with respect to the flow of the reaction gas R is as described above.

(Dechlorination)

The crude titanium oxide produced as described above is preferably treated by dechlorination. Dechlorination of the titanium oxide by heating is preferably carried out by contacting the titanium oxide particles with water vapor with a mass ratio of water and titanium oxide (= water vapor mass/titanium oxide mass, same hereunder) of 0.01 or greater, while heating at a heating temperature of 200°C to 550°C. More preferably, the mass ratio of water and titanium oxide is 0.04 or greater and the heating temperature is 250°C to 450°C. If the heating temperature exceeds 550°C, sintering of the titanium oxide particles may progress, resulting in non-uniform primary particle sizes. If the heating temperature is below 200°C the dechlorination efficiency may be extremely reduced. In order to achieve dechlorination while inhibiting particle growth it is also preferred to control the mass ratio of the water and titanium oxide, a particle growth control effect being obtained with a water/titanium oxide mass ratio of 0.01 or greater, preferably 0.01 to 1, more preferably 0.05 to 2 and even more preferably 0.2 to 1.8.

The water vapor contacted with the titanium oxide is preferably used as a mixture with a gas that can efficiently cause the chlorine separated from the titanium oxide to migrate out of the system, such as air, for example. When air is used, the water vapor is preferably present in the air at 0.1 vol% or greater, even more preferably 5 vol% or greater and most preferably 10 vol% to 80 vol%. Water vapor-containing air has been preferably heated to 200°C to 1,000°C and more preferably 450°C to 850°C.

For dechlorination of titanium oxide, it is also effective to use a method in which the interior of the container used for dechlorination is depressurized, as a method for moving the chlorine removed from the titanium oxide out of the system. The pressure reduction in the container is preferably 0.5 kPa or greater. It is even more preferably 0.5 kPa to 3.5 kPa. The pressure reduction in this case is the differential pressure between the pressure in the depressurized container and the atmospheric pressure.

The titanium oxide particles of the embodiment contain virtually no chlorine inside the particles, with most of the chlorine being on the particle surfaces where it can be removed by washing, so that chlorine-reduction in a wet system is possible. Examples of wet dechlorination methods include methods in which the titanium oxide particles are suspended in purified water, and the chlorine migrated into the liquid phase is separated out of the system using an ultrafiltration membrane, reverse osmosis membrane or filter press.

· Anatase content

In titanium oxide reaction, a higher temperature during the reaction steps results in a lower anatase content with tendency toward rutile transition, but the anatase content can be adjusted by adjusting the quantity of heat received by the titanium oxide when the cooling medium is introduced after the reaction. If the temperature during the reaction steps is too low, the reaction will fail to go to completion, producing lower crystallinity in the resulting titanium oxide.

· Impurity concentration

A lower level of impurities in the titanium tetrachloride starting material results in fewer impurities in the titanium oxide, and it is therefore preferred to use high-purity titanium tetrachloride with a low level of impurities.

· BET specific surface area

In titanium oxide reaction, a higher temperature during the reaction steps tends to promote sintering between the titanium oxide, lowering the BET specific surface area. The means for increasing the BET specific surface area may be inhibiting sintering by introduction of a diluent gas into the reaction site, or by cooling.

EXAMPLES

The invention will now be explained in detail through Examples and Comparative Examples, with the understanding that these are not limitative on the invention.
The methods for measuring the physical properties of the titanium oxide particles were the following.

(1) Anatase content

The content of anatase crystals in the titanium oxide particles (anatase content) was measured by powder X-ray diffraction. Specifically, the dried titanium oxide particles were measured by X-ray diffraction using a "X'pertPRO" by PANalytical as the measuring apparatus, under conditions with a copper target, Cu-K$\alpha$1 rays, a tube voltage of 45 kV, a tube current of 40 mA, measurement range $2\theta$ = 10-80 deg, a sampling width of 0.0167 deg and a scanning rate of 0.0192 deg/s. After determining the peak height (Ha) of the maximum peak corresponding to anatase crystals, the peak height (Hb) of the maximum peak corresponding to brookite crystals, and the peak height (Hr) of the maximum peak corresponding to rutile crystals, the content of anatase crystals in the titanium oxide particles (anatase content) was calculated by the following formula.

$$\text{Anatase content } (\%) = \{\text{Ha}/(\text{Ha} + \text{Hb} + \text{Hr})\} \times 100$$

(2) BET Specific surface area

The BET specific surface area ($m^2$/g) of the titanium oxide particles was measured using a specific surface area measuring device (MACSORB) by Mountech Co., Ltd. Nitrogen was used as the measuring gas.

(3) Chlorine (Cl) content

The Cl content of the titanium oxide particles was measured by silver nitrate potentiometric titration. Specifically, the titanium oxide particles were weighed. A silver nitrate solution was then dropped into a solution of the titanium oxide particles, and the difference in potential was measured to determine the mass of chlorine atoms in the solution, calculating the chlorine content (mass%).

(4) D10 (SEM), D50 (SEM), D90 (SEM) And D99 (SEM) of primary particles of titanium oxide particles by scanning electron microscope

A 1 g portion of sample was loaded into 100 ml of ethanol, and after ultrasonic irradiation (30 W, 5 min), the dispersion was separated using a Pasteur pipette and approximately 0.05 g was dropped onto an aluminum foil. After natural drying in a laboratory atmosphere, the aluminum foil was affixed to a SEM sample stage and measured using a field emission scanning electron microscope (S-5500 by Hitachi High-Tech Fielding Corp.). An acceleration voltage of 2.0 kV was used as the SEM measuring conditions. An image was taken containing 200 to 300 primary particles per visual field, and the primary particle size (circle equivalent diameter: specifically the Heywood diameter) of each of the approximately 200 to 300 primary particles in the image was determined using image analysis software. The image analysis software used was Ryushi Bunseki Ver.3 by Sumitomo Metal Technologies and Mac-View Ver.3 by Mountech Co., Ltd. The same procedure was carried out on the same sample in a different visual field, repeating the procedure until the total number of particles used for calculation of the primary particles exceeded at least 1000. The D10 (SEM), D50 (SEM), D90 (SEM) and D99 (SEM) particle sizes were calculated, where the cumulative total was respectively 10%, 50%, 90% and 99% of the total integrated value in order from smallest particle size, in the cumulative particle size distribution based on the number of particles.

(5) D50 (LD) and D90 (LD) of titanium oxide particles by laser diffraction/scattering

In a 100 ml tall beaker there were added 0.05 g of titanium oxide particles, 50 ml of purified water and 100 $\mu$l of an aqueous 10 mass% sodium hexametaphosphate solution to prepare a slurry, and then a $\varphi$8 mm TEFLON$^R$ rod was used for stirring of the slurry in the tall beaker while irradiating it with ultrasonic waves (50 KHz, 100 W) for 3 minutes. The stirring was only for 1 minute at the start of the ultrasonic irradiation. The ultrasonic bath used had a box shape with inner dimensions of 230 mm $\times$ 200 mm $\times$ 152 mm, and a water volume of 450 ml. The position of the tall beaker during ultrasonic irradiation was near the center of the ultrasonic bath. The slurry was used for measurement of the particle size distribution (volume cumulative particle size distribution) using a laser diffraction particle size distribution analyzer (Microtrac MT3300EXII) by Microtrac. The D50 (LD) and D90 (LD) were calculated.

(6) D50 (DLS) and D90 (DLS) of disaggregated titanium oxide particles by dynamic light scattering

After adding 300 ml of purified water to 100 g of titanium oxide particles, a slurry was prepared containing 5% polycarboxylic acid per weight of titanium oxide, as a dispersant, and then the slurry was charged into a ball mill container, 1.2 kg of 0.5 mm$\varphi$ zirconia balls was added, and the mixture was placed on the mount of the ball mill and rotated at 7 rpm for 72 hours to obtain a disaggregated titanium oxide slurry, which was measured for volume-based particle size distribution using a dynamic light scattering particle size distribution analyzer (ELS-Z by Otsuka Electronics Co., Ltd.).

(7) Particicle concentration of coarse particles

A field emission scanning electron microscope was used to take an image containing 8000 to 12,000 primary particles per visual field, the presence or absence of large particles having at least specified dimensions (such as 0.20 $\mu$m or greater, or 0.30 $\mu$m or greater) in consideration of D50 (SEM) was confirmed using the particle counting tool of image analysis software, and when particles corresponding to at least the specified dimensions were present, the primary particle sizes (circle equivalent diameter: specifically the Heywood diameter) of those particles were determined using image analysis software. The same procedure was carried out for the same sample in different visual fields, observing a number of visual fields corresponding to observation of at least 1,000,000 particles. Of the coarse particles whose primary particle sizes were measured, the value of the number of coarse particles having at least the specified dimensions listed in Table 2 divided by the total number of observed particles was recorded as the content (particle concentration) of coarse particles. The total number of observed particles was calculated from the number of primary particles per visual field and the number of observation fields.

(8) Content of other impurities

The method of measuring the impurities was as follows.

Fe: Atomic absorption (Z-2300 atomic absorption photometer by Hitachi High-Technologies Corp.)
Al, Si: Fluorescent X-ray analysis (XRF) (SIMULTEX 10 by Rigaku Corp.)
C, S: High-frequency induction furnace combustion/infrared absorption
Na, Ni, Cr, Nb, Zr: Inductively coupled plasma-mass spectrometry

Example 1

<First step>

Using a vertical reaction tube with a circular cross-section, a titanium tetrachloride dilution (G1) obtained by diluting titanium tetrachloride gas (titanium tetrachloride purity: $\geq$99.99 mass%) at 1053 mol/hr with nitrogen gas at 223 mol/hr, was preheated to 950°C, an oxidizing gas (G2) obtained by mixing nitrogen gas at 22 mol/hr with oxygen at 982 mol/hr and water vapor at 1786 mol Nm$^3$/hr was preheated to 870°C, and the two gases (G1 and G2) were introduced into the top of a reactor having a ratio (S1/S2) of 6.7, where (S1) was the cross-sectional area of the reaction tube and (S2) was the total cross-sectional area of the inlet tubes for the gas (G1) containing titanium tetrachloride and the oxidizing gas (G2). The purge air and cooling air were introduced into the reaction tube from the side of the reaction tube so that the high-temperature residence time at 800°C or higher and below 1,200°C was 0.05 seconds, and the crude titanium oxide particles were trapped at the bottom of the reaction tube with a polytetrafluoroethylene bag filter. The other conditions are also listed in Table 1. The flow velocity (m/s) of the reaction gas flow was calculated from the cross-sectional area (m$^2$) of the reaction tube and the flow rate (m$^3$/s) of the reaction gas flow after reaction between the source gas and oxidizing gas.

<Second step>

The obtained crude titanium oxide particles were passed through a cylindrical rotating heating furnace, and dechlorinated with a mass ratio of 0.06 for the water vapor and crude titanium oxide (mass of water vapor/mass of crude titanium oxide particles) and a heating temperature of 450°C, to obtain titanium oxide particles which were measured for the different properties. The measurement results are shown in Table 2.

Examples 2 to 5

These Examples were carried out with changed conditions for the first step. The conditions are listed in Table 1. The second step was carried out in the same manner as Example 1. The measurement results are shown in Table 2.

Comparative Example 1

The first step and second step were carried out in the same manner as Example 1, except for the blowout angle α of the purge medium. The measurement results are shown in Table 2.

Comparative Example 2

The first step and second step were carried out in the same manner as Example 2, except for the blowout flow velocity (B) of the purge medium. The measurement results are shown in Table 2.

Comparative Example 3

The first step and second step were carried out in the same manner as Example 4, except for the preheating temperature of the source gas G1, the flow rate of the oxidizing gas G2 and the blowout flow velocity (B) of the purge medium. The measurement results are shown in Table 2.

Comparative Example 4 (liquid phase method)

An aqueous solution with a titanium tetrachloride concentration of 0.5 mol/L was heated to reflux for 3 hours at 100°C for hydrolysis, to obtain ultrafine particles of a titanium oxide sol. The obtained titanium oxide sol was repeatedly washed with purified water and then dried in a hot air circulating drier at 120°C for 12 hours. The physical properties of the obtained titanium oxide particles were measured. The measurement results are shown in Table 2.

[Table 1]

Table 1

| - | Conditions | Units | Example 1 | Example 2 | Example 3 | Example 4 | Example 5 | Comp. Example 1 | Comp. Example 2 | Comp. Example 3 | Comp. Example 4 |
|---|---|---|---|---|---|---|---|---|---|---|---|
| Source gas | Flow rate of source gas G1 | mol/hr | 1276 | 616 | 1448 | 1818 | 1233 | 1276 | 616 | 1818 | - |
| | Flow rate of titanium tetrachloride in G1 | mol/hr | 1053 | 527 | 421 | 211 | 1211 | 1053 | 527 | 211 | |
| | Flow rate of inert gas in G1 | mol/hr | 223 | 89 | 1027 | 1607 | 22 | 223 | 89 | 1607 | - |
| | Preheating temperature of source gas G1 | °C | 950 | 1150 | 950 | 1100 | 940 | 950 | 1150 | 1150 | - |
| | Flow rate of oxidizing gas G2 | mol/hr | 2790 | 2746 | 2344 | 3058 | 2701 | 2790 | 2746 | 3504 | - |
| | Flow rate of water vapor in G2 | mol/hr | 1786 | 2232 | 2009 | 2232 | 1563 | 1786 | 2232 | 2679 | - |
| | Flow rate of oxygen gas in G2 | mol/hr | 982 | 491 | 313 | 804 | 1116 | 982 | 491 | 804 | - |
| | Flow rate of inert gas in G2 | mol/hr | 22 | 22 | 22 | 22 | 22 | 22 | 22 | 22 | - |
| | Preheating temperature of oxidizing gas G2 | °C | 870 | 1150 | 950 | 1050 | 900 | 870 | 1150 | 1050 | - |
| Reaction tube | Reaction tube internal temperature | °C | 1050 | 1200 | 1000 | 1050 | 1100 | 1050 | 1200 | 1050 | - |
| | Cross-sectional area ratio (S1/S2) | - | 6.7 | 2.0 | 2.0 | 2.0 | 6.7 | 6.7 | 2.0 | 2.0 | - |

EP 4 342 849 A1

| - | Conditions | Units | Example 1 | Example 2 | Example 3 | Example 4 | Example 5 | Comp. Example 1 | Comp. Example 2 | Comp. Example 3 | Comp. Example 4 |
|---|---|---|---|---|---|---|---|---|---|---|---|
| Reaction gas | High-temperature residence time | sec | 0.05 | 0.01 | 0.01 | 0.01 | 0.05 | 0.05 | 0.01 | 0.01 | - |
| | Residence time ($\geq$500°C) | sec | 0.6 | 0.4 | 0.4 | 0.2 | 0.7 | 0.6 | 0.4 | 0.2 | - |
| | Flow velocity (A) | m/s | 11 | 44 | 44 | 64 | 10 | 11 | 44 | 64 | - |
| Purge medium | Blowout angle $\alpha$ | degree | 50 | 50 | 50 | 50 | 50 | 0 | 50 | 50 | - |
| | Blowout angle $\beta$ | degree | 90 | 90 | 90 | 90 | 90 | 90 | 90 | 90 | - |
| | Flow velocity (B) | m/s | 59 | 59 | 66 | 66 | 59 | 59 | 5 | 6 | - |
| | Temperature | °C | 25 | 25 | 25 | 25 | 25 | 25 | 25 | 25 | - |
| Flow velocity ratio | B/A | - | 5.4 | 1.4 | 1.5 | 1.0 | 5.9 | 5.4 | 0.1 | 0.1 | - |
| Cooling medium | Blowout angle $\gamma$ | degree | 30 | 30 | 30 | 30 | 30 | 30 | 30 | 30 | - |
| | Blowout angle $\delta$ | degree | 90 | 90 | 90 | 90 | 90 | 90 | 90 | 90 | - |
| | Temperature | °C | 20 | 20 | 20 | 20 | 20 | 20 | 20 | 20 | - |

EP 4 342 849 A1

19

[Table 2]

Table 2

| | | Units | Example 1 | Example 2 | Example 3 | Example 4 | Example 5 | Comp. Example 1 | Comp. Example 2 | Comp. Example 3 | Comp. Example 4 |
|---|---|---|---|---|---|---|---|---|---|---|---|
| Particle size distribution | D50 (DLS) | nm | 52 | 65 | 48 | 38 | 95 | 56 | 69 | 37 | 46 |
| | D90 (DLS) | nm | 89 | 99 | 81 | 60 | 174 | 97 | 105 | 61 | 71 |
| | D10 (SEM) | nm | 31 | 26 | 21 | 18 | 38 | 29 | 26 | 13 | 6 |
| | D50 (SEM) | nm | 44 | 38 | 29 | 23 | 62 | 43 | 33 | 18 | 10 |
| | D90 (SEM) | nm | 64 | 52 | 44 | 31 | 84 | 65 | 50 | 26 | 14 |
| | D99 (SEM) | nm | 79 | 64 | 57 | 41 | 108 | 89 | 67 | 34 | 19 |
| | D50 (LD) | nm | 470 | 460 | 440 | 520 | 500 | 470 | 470 | 600 | 1560 |
| | D90 (LD) | nm | 610 | 580 | 700 | 920 | 710 | 610 | 600 | 1050 | 4430 |

| | | Units | Example 1 | Example 2 | Example 3 | Example 4 | Example 5 | Comp. Example 1 | Comp. Example 2 | Comp. Example 3 | Comp. Example 4 |
|---|---|---|---|---|---|---|---|---|---|---|---|
| | D90 (DLS)/D50 (DLS) | - | 1.7 | 1.5 | 1.7 | 1.6 | 1.8 | 1.7 | 1.5 | 1.6 | 1.5 |
| | D90 (SEM)/D50 (SEM) | - | 1.4 | 1.4 | 1.5 | 1.4 | 1.4 | 1.5 | 1.5 | 1.5 | 1.5 |
| | D99 (SEM)/D50 (SEM) | - | 1.8 | 1.7 | 2.0 | 1.8 | 1.7 | 2.1 | 2.0 | 1.9 | 2.0 |
| | (D90 (SEM)-D10 (SEM))/D50 (SEM) | - | 0.74 | 0.70 | 0.80 | 0.58 | 0.74 | 0.84 | 0.73 | 0.74 | 0.83 |
| | D90 (LD)/D50 (LD) | - | 1.3 | 1.3 | 1.6 | 1.8 | 1.4 | 1.3 | 1.3 | 1.8 | 2.8 |
| | D90 (DLS)/D90 (SEM) | - | 1.4 | 1.9 | 1.8 | 1.9 | 2.1 | 1.5 | 2.1 | 2.3 | 5.1 |
| | BET specific surface area | m$^2$/g | 29 | 31 | 50 | 93 | 19 | 28 | 30 | 92 | 310 |
| | Anatase content | % | 79 | 96 | 96 | 96 | 78 | 75 | 95 | 96 | 100 |
| | Cl | mass% | 0.14 | 0.09 | 0.10 | 0.09 | 0.19 | 0.14 | 0.08 | 0.09 | <0.01 |
| | C | mass% | <0.01 | <0.01 | <0.01 | <0.01 | <0.01 | <0.01 | <0.01 | <0.01 | <0.01 |
| | Si | mass% | <0.01 | <0.01 | <0.01 | <0.01 | <0.01 | <0.01 | <0.01 | <0.01 | <0.01 |
| | Na | mass% | <0.001 | <0.001 | <0.001 | <0.001 | <0.001 | <0.001 | <0.001 | <0.001 | <0.001 |
| | Al | mass% | <0.001 | <0.001 | <0.001 | <0.001 | <0.001 | <0.001 | <0.001 | <0.001 | <0.001 |
| | S | mass% | <0.001 | <0.001 | <0.001 | <0.001 | <0.001 | <0.001 | <0.001 | <0.001 | <0.001 |
| | Fe | mass% | <0.001 | <0.001 | <0.001 | <0.001 | <0.001 | <0.001 | <0.001 | <0.001 | <0.001 |
| | Ni | mass% | <0.001 | <0.001 | <0.001 | <0.001 | <0.001 | <0.001 | <0.001 | <0.001 | <0.001 |
| | Cr | mass% | <0.001 | <0.001 | <0.001 | <0.001 | <0.001 | <0.001 | <0.001 | <0.001 | <0.001 |
| | Nb | mass% | <0.001 | <0.001 | <0.001 | <0.001 | <0.001 | <0.001 | <0.001 | <0.001 | <0.001 |
| | Zr | mass% | <0.001 | <0.001 | <0.001 | <0.001 | <0.001 | <0.001 | <0.001 | <0.001 | <0.001 |

EP 4 342 849 A1

22

[Table 3]

Table 3

| | Units | Example 1 | Example 2 | Example 3 | Example 4 | Example 5 | Comp. Example 1 | Comp,. Example 2 | Comp. Example 3 | Comp. Example 4 |
|---|---|---|---|---|---|---|---|---|---|---|
| D50(SEM) | nm | 44 | 38 | 29 | 23 | 62 | 43 | 33 | 18 | 10 |
| Particle concentration of coarse particles ($\geq$200 nm) | ppm | 90 | 134 | 10 | 1 | 226 | 1932 | 313 | 59 | 0 |
| Particle concentration of coarse particles ($\geq$300 nm) | ppm | 31 | 79 | 5 | 0 | 54 | 884 | 210 | 29 | 0 |
| Particle concentration of coarse particles ($\geq$400 nm) | ppm | 11 | 41 | 1 | 0 | 12 | 319 | 139 | 12 | 0 |
| Particle concentration of coarse particles ($\geq$500 nm) | ppm | 6 | 13 | 0 | 0 | 4 | 123 | 81 | 4 | 0 |
| Particle concentration of coarse particles ($\geq$600 nm) | ppm | 4 | 4 | 0 | 0 | 0 | 46 | 36 | 1 | 0 |
| Particle concentration of coarse particles ($\geq$700 nm) | ppm | 2 | 1 | 0 | 0 | 0 | 21 | 13 | 0 | 0 |
| Particle concentration of coarse particles ($\geq$800 nm) | ppm | 0 | 0 | 0 | 0 | 0 | 0 | 0 | 0 | 0 |
| Particle concentration of coarse particles ($\geq$900 nm) | ppm | 0 | 0 | 0 | 0 | 0 | 0 | 0 | 0 | 0 |
| 16x D50 (SEM) | nm | 704 | 608 | 464 | 368 | 992 | 688 | 528 | 288 | 160 |
| Particle concentration of coarse particles having a size exceeding 16x D50 (SEM) | ppm | 0-2 | 1-4 | 0-1 | 0 | 0 | 21-46 | 36-81 | 29-59 | 0 |

Referring to Tables 1 to 3, with the gas phase-produced titanium oxide particles of Examples 1 to 5 and Comparative Examples 1 to 3, no clear difference was seen in the particle size distributions shown in Table 2, but the particle concentration of coarse particles (primary particles) having a size exceeding 16x the D50 (SEM) was lower in Examples 1 to 5, suggesting that introduction of the purge medium through the reactor walls with at least the specified angle produced an effect of reducing coarse particles. With the liquid phase-produced titanium oxide particles of Comparative Example 4, coarse particles having a size larger than the specified dimensions were not observed, but dispersibility in the dispersing medium was low, presumably due to the large D50 (LD) and D90 (LD).

The present invention therefore provides titanium oxide particles with fewer coarse particles and superior homogeneity and dispersibility compared to conventional titanium oxide particles with equivalent BET specific surface area, as well as a method for their production. The titanium oxide particles of the invention are suitable for use in photocatalysts, solar cells and dielectric materials, and since their powder requires no equipment or very minimal equipment for disaggregation, it has very high practical industrial value.

INDUSTRIAL APPLICABILITY

The titanium oxide particles of the invention are suitable for use in photocatalysts, solar cells and dielectric materials, and since their powder requires no equipment or very minimal equipment for disaggregation, it has very high practical industrial value.

REFERENCE SIGNS LIST

1 Reaction tube
1' Reaction zone
2 Cooling zone
3 Cooling medium blowing outlet
4 Reaction tube center
5 Purge medium blowing outlet
G1 Source gas
G2 Oxidizing gas
P Purge medium
Q Cooling medium
R Reaction gas flow direction
$\alpha$ Purge medium blowout angle (within plane perpendicular to direction of reaction gas flow)
$\beta$ Purge medium blowout angle (within plane including direction of reaction gas flow)
$\gamma$ Cooling medium blowout angle (within plane perpendicular to direction of reaction gas flow)
$\delta$ Cooling medium blowout angle (within plane including direction of reaction gas flow)

**Claims**

1. Titanium oxide particles, wherein the D90 (LD)/D50 (LD) ratio of the titanium oxide particles is greater than 1.0 and 2.0 or lower, as measured by laser diffraction/scattering analysis, and the particle concentration of coarse particles having a size exceeding 16 times the size of D50 (SEM) of primary particles of the titanium oxide particles as observed under a field emission scanning electron microscope is 20 ppm or lower (based on the number of particles).

2. Titanium oxide particles according to Claim 1, wherein the D90 (SEM)/D50 (SEM) ratio of primary particles of the titanium oxide particles as observed under a field emission scanning electron microscope is greater than 1.0 and 2.0 or lower.

3. Titanium oxide particles according to Claim 1 or 2, wherein the [D90 (SEM) - D10 (SEM)]/D50 (SEM) ratio of primary particles of the titanium oxide particles as observed under a field emission scanning electron microscope is 0.82 or lower.

4. Titanium oxide particles according to Claim 1 or 2, wherein the D99 (SEM)/D50 (SEM) ratio of primary particles of the titanium oxide particles as observed under a field emission scanning electron microscope is greater than 1.0 and 2.0 or lower.

5. Titanium oxide particles according to Claim 1 or 2, wherein the D90 (DLS)/D50 (DLS) ratio of the titanium oxide particles as measured by dynamic light scattering is greater than 1.0 and 2.0 or lower.

6. Titanium oxide particles according to a Claim 1 or 2, wherein the D90 (DLS)/D90 (SEM) ratio, as the ratio of the D90 (DLS) for the titanium oxide particles as measured by dynamic light scattering and the D90 (SEM) for primary particles of the titanium oxide particles observed under a field emission scanning electron microscope, is 2.2 or lower.

7. Titanium oxide particles according to Claim 1 or 2, wherein the D90 (LD) for the titanium oxide particles as measured by laser diffraction/scattering analysis is 3000 nm or lower.

8. Titanium oxide particles according to Claim 1 or 2, wherein the D90 (DLS) for the titanium oxide particles as measured by dynamic light scattering and the D90 (SEM) for primary particles of the titanium oxide particles observed under a field emission scanning electron microscope, are 200 nm or lower, and the D50 (SEM) is 10 to 150 nm.

9. Titanium oxide particles according to Claim 1 or 2, wherein the anatase content is 70% or greater.

10. Titanium oxide particles according to Claim 1 or 2, wherein the BET specific surface area is 5 to 200 $m^2/g$.

11. Titanium oxide particles according to Claim 1 or 2, wherein the Cl content of the titanium oxide particles as measured by silver nitrate potentiometric titration is 0.2% or lower.

12. Titanium oxide particles according to Claim 1 or 2, wherein the Na, Al, S, Fe, Ni, Cr, Nb and Zr contents are each 10 ppm by mass or lower, and the Si and C contents are each 500 ppm by mass or lower.

13. A method for producing titanium oxide particles wherein, for a step in which a source gas comprising titanium tetrachloride and an inert gas, and an oxidizing gas comprising either or both of oxygen gas and water vapor in addition to an inert gas, are introduced into a reaction tube and are reacted and then cooled to produce titanium oxide particles, a blowing outlet for a purge medium is provided on the inner wall of the reaction tube and the purge medium is introduced in a swirling manner along the inner wall of the reaction tube, with the blowout angle $\alpha$ of the purge medium from the inner wall of the reaction tube being 50° or greater with respect to a line connecting the blowing outlet of the purge medium and the center axis line of the reaction tube, on a plane projected onto a cross-section of the reaction tube that is perpendicular to the axis line of the reaction tube, and the blowout flow velocity (B) of the purge medium being 35 m/s or greater.

14. The method for producing titanium oxide particles according to Claim 13, wherein the blowout angle $\beta$ of the purge medium from the inner wall of the reaction tube with respect to the direction of the axis line of the reaction tube, on a plane projected onto a longitudinal section of the reaction tube that includes the axis line of the reaction tube, is 60° or greater, where 0° is the downstream side of the reaction gas flow.

15. The method for producing titanium oxide particles according to Claim 13 or 14, wherein the purge medium is introduced so that the ratio B/A is 0.5 or greater, where A is the flow velocity of the reaction gas formed from the source gas and the oxidizing gas in the reaction tube and B is the blowout flow velocity of the purge medium.

16. A slurry that includes titanium oxide particles according to Claim 1 or 2.

17. A dispersion that includes titanium oxide particles according to Claim 1 or 2.

18. A composition that includes titanium oxide particles according to Claim 1 or 2.

19. A dielectric starting material that includes titanium oxide particles according to Claim 1 or 2.

# FIG. 1

(a)

S5500 2.0kV x100k SE 500nm

(b)

S5500 2.0kV x100k SE 500nm

# FIG. 2

G1    G2

# FIG. 3

# FIG. 4

G1  G2

## INTERNATIONAL SEARCH REPORT

| International application No. |
| --- |
| **PCT/JP2022/019383** |

| **A.** | **CLASSIFICATION OF SUBJECT MATTER** |
| --- | --- |

*C01G 23/07*(2006.01)i
FI:    C01G23/07

According to International Patent Classification (IPC) or to both national classification and IPC

| **B.** | **FIELDS SEARCHED** |
| --- | --- |

Minimum documentation searched (classification system followed by classification symbols)

C01G23/07

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | JP 50-025919 B1 (ISHIHARA SANGYO KAISHA, LTD.) 27 August 1975 (1975-08-27) claim 1, example 1, fig. 1-2 | 1-8, 10, 13-15 |
| Y | | 9, 11-12, 16-19 |
| Y | JP 2003-327432 A (SHOWA DENKO KK) 19 November 2003 (2003-11-19) claims, paragraphs [0008], [0024] | 9, 11-12, 16-19 |
| Y | JP 2006-265094 A (SHOWA DENKO KK) 05 October 2006 (2006-10-05) claims, paragraphs [0010], [0075]-[0076] | 9, 11-12, 16-19 |
| A | JP 49-030916 B1 (BRITISH TITAN PRODUCTS COMPANY LIMITED) 16 August 1974 (1974-08-16) entire text | 1-19 |
| A | JP 51-008192 A (NIPPON MINING CO) 22 January 1976 (1976-01-22) entire text | 1-19 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 June 2022** | **21 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/019383**

| Patent document cited in search report | | | Publication date (day/month/year) | Patent family member(s) | | Publication date (day/month/year) |
|---|---|---|---|---|---|---|
| JP | 50-025919 | B1 | 27 August 1975 | (Family: none) | | |
| JP | 2003-327432 | A | 19 November 2003 | US | 2005/0076811 A1 | |
| | | | | claims, paragraphs [0009], [0066] | | |
| | | | | WO | 2003/074426 A1 | |
| | | | | EP | 1483205 B1 | |
| | | | | CN | 1703372 A | |
| | | | | KR | 10-0659031 B1 | |
| | | | | JP | 2007-314418 A | |
| JP | 2006-265094 | A | 05 October 2006 | US | 2008/0112880 A1 | |
| | | | | claims, paragraphs [0010], [0081]-[0083] | | |
| | | | | WO | 2006/098175 A1 | |
| | | | | EP | 1853518 B1 | |
| | | | | KR | 10-2007-0087007 A | |
| | | | | CN | 101124165 A | |
| | | | | JP | 2011-57552 A | |
| JP | 49-030916 | B1 | 16 August 1974 | US | 3464792 A | |
| | | | | entire text | | |
| | | | | GB | 1097764 A | |
| JP | 51-008192 | A | 22 January 1976 | (Family: none) | | |

Form PCT/ISA/210 (patent family annex) (January 2015)

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006265094 A

- JP 2005209877 A